# FASCICULE DE BREVET EUROPEEN

(11) **EP 1 435 790 B1**
(45) Date de publication et mention de la délivrance du brevet: **05.10.2011**
(21) Numéro de dépôt: 02795322.3
(22) Date de dépôt: 16.10.2002
(51) Int. Cl.: A21C 1/00, A21C 1/10, A21C 1/06, B01F 15/00, B01F 13/06, A21D 8/02

(54) **PROCEDE DE PETRISSAGE SOUS VIDE AVEC INTRODUCTION D'OXYGENE ET DISPOSITIF POUR LA MISE EN OEUVRE DUDIT PROCEDE**
VAKUUMKNETVERFAHREN UNTER EINLEITUNG VON SAUERSTOFF UND DIE ZUR DURCHFÜHRUNG DES VERFAHRENS VERWENDETE VORRICHTUNG
VACUUM KNEADING METHOD WITH THE INTRODUCTION OF OXYGEN AND THE DEVICE USED TO CARRY OUT SAID METHOD

(30) Priorité: 19.10.2001 FR 0113521
(43) Date de publication de la demande: 14.07.2004
(73) Titulaire: VMI (Société anonyme), 85600 Montaigu (FR)
(72) Inventeur: FISSON, Gerard, F-85600 Saint Hilaire de Loulay (FR); JAUNET, Laurent, F-85600 Saint Hilaire de Loulay (FR); VANNIER, Guillaume, F-44100 Nantes (FR)
(74) Mandataire: Gaillarde, Frédéric F. Ch.
(86) Numéro de dépôt international: PCT/FR2002/003542
(87) Numéro de publication internationale: WO 2003/032736

(56) Documents cités:
- EP-A- 0 246 768
- DE-U- 7 430 262
- FR-A- 2 515 001
- GB-A- 318 851
- GB-A- 2 264 623
- PATENT ABSTRACTS OF JAPAN vol. 1997, no. 10, 31 octobre 1997 (1997-10-31) & JP 09 154496 A (OSAKA JIDOKI KK), 17 juin 1997 (1997-06-17)
- PATENT ABSTRACTS OF JAPAN vol. 014, no. 106 (C-0694), 27 février 1990 (1990-02-27) & JP 01 309633 A (IIDA SEISAKUSHO:KK), 14 décembre 1989 (1989-12-14)

## Description

L'invention concerne un procédé de pétrissage de pâte pour la fabrication de pain ou de produits similaires et un dispositif pour la mise en oeuvre dudit procédé.

On connaît des documents JP 09.154496, FR 2515001 et DE 7430262u notamment des procédés de pétrissage et des dispositifs de mélange.

Le document JP 09.154496 décrit un procédé de pétrissage de préparation tels que des gâteaux de riz ou des pâtes de fruits prévoyant une phase de pétrissage durant laquelle on introduit de la vapeur d'eau dans l'enceinte via une buse, ladite vapeur d'eau étant ensuite évacuée par une buse d'échappement. Le procédé connaît alors une phase de refroidissement durant laquelle de l'air est injecté dans l'enceinte et évacué par la buse d'échappement.

Le dispositif de mise en oeuvre comprend une enceinte formée d'une cuve et d'un couvercle, un rotor, des moyens d'amenée du gaz et des conduits d'évacuation.

Le document FR 2 515 001 décrit un procédé et une installation de fabrication de pain. Le dispositif correspondant comprend une enceinte formée d'une cuve et d'un couvercle fermant hermétiquement et un rotor pour le pétrissage. En outre la cuve comprend des moyen pour maintenir la cuve en dépression et des moyens d'amenée de gaz débouchant dans l'enceinte.

Le document EP-A-0 246 768 décrit une méthode et un appareil de pétrissage de pâte à pain dans une atmosphère enrichie en oxygène. A cet effet, de l'oxygène ou de l'air enrichi en oxygène est introduit dans l'enceinte de l'appareil contenant la pâte avant ou en cours de pétrissage. Cet apport en oxygène favorise l'action de l'acide ascorbique, utilisé comme unique produit d'amélioration (appelé améliorant dans le domaine technique).

Ce document décrit que l'application d'un vide partiel dans l'enceinte n'est pas nécessaire mais qu'elle peut être réalisée avant l'introduction de l'oxygène ou de l'air enrichi en oxygène.

Toutefois ce procédé ne permet pas de contrôler le développement de la structure de bulles dans la pâte à pain.

D'après le document EP-A-0 629 115, il est connu que la réalisation d'un vide partiel lors du pétrissage permet d'améliorer l'uniformité de la structure de la mie de pain. Cependant, la création d'un vide partiel enlève l'air, ce qui diminue l'oxydation des améliorants utilisés par les boulangers (acide ascorbique ou bromate de potassium) pour intensifier la formation du réseau de gluten et stabiliser la structure des bulles.

Le document EP-A-0 629 115 décrit un procédé de pétrissage de pâte permettant d'optimiser l'utilisation de l'acide ascorbique en tant qu'améliorant A cet effet, le procédé comprend le pétrissage des ingrédients de la pâte en présence d'air ou d'un gaz contenant de l'oxygène. Pendant une première phase de ce pétrissage, une surpression est appliquée à l'atmosphère entourant la pâte, tandis qu'une pression réduite est appliquée pendant une seconde phase de pétrissage. La première phase permet l'oxydation de l'acide ascorbique, la seconde phase permettant de contrôler la structure des bulles dans la pâte.

Ce procédé présente l'inconvénient d'imposer deux phases de pétrissage, dont une phase en surpression d'air difficile à réaliser avec les moyens de pétrissage habituels.

En effet, des contraintes élevées sont exercées par la pression d'air sur l'enceinte de mélange et sur son environnement mécanique tels que par exemple le(s) outil(s) de mélange, le(s) joints(s) d'étanchéité, le couvercle de la cuve.

L'invention vise à résoudre les inconvénients précités de l'art antérieur, en proposant un procédé permettant une oxygénation adéquate de la pâte en même temps que le contrôle de la structure des bulles à l'intérieur de celle-ci.

Le procédé permet ainsi d'optimiser l'uniformité de la structure de la mie de pain tout en garantissant une oxygénation suffisante de celle-ci.

A cet effet, un premier objet de l'invention est un procédé de pétrissage de pâte pour la fabrication de pain ou de produits similaires, suivant la revendication 1.

Aucune surpression par rapport à la pression atmosphérique n'est ainsi appliquée dans l'enceinte, ce qui permet d'éviter l'application de contraintes Dans une variante, la phase de dépression débute peu de temps avant ou après le début de la phase de pétrissage et/ou finit peu de temps avant ou après la fin de la phase de pétrissage.

Dans une autre variante, la (les) phase(s) d'introduction du gaz débutent peu de temps avant ou après le début ou la fin de la phase de pétrissage, et/ou finissent peu de temps avant ou après le début ou la fin de la phase de pétrissage.

Dans une réalisation, le procédé comprend une seule phase d'introduction du gaz G qui dure sensiblement pendant toute la phase de pétrissage.

Dans une autre réalisation, le procédé comprend plusieurs phases d'introduction, les intervalles de temps entre ces phases et la durée de chacune de ces phases étant variables.

Chaque phase d'introduction peut durer quelques secondes à plusieurs dizaines de minutes.

Par ailleurs, durant chaque phase d'introduction, on peut faire varier le débit de gaz G.

Et durant la phase de dépression, on peut appliquer une pression absolue dans l'enceinte (2) comprise entre 0,02 bar et 0,98 bar.

Dans une variante, on peut introduire ledit gaz (G) dans l'enceinte (2) dans le volume de la pâte (P).

Un deuxième objet de l'invention est un dispositif mettant en oeuvre le procédé décrit précédemment, suivant la revendication 11.

Dans une variante, lesdits moyens d'amenée et lesdits conduits d'évacuation sont disposés sur des parties sensiblement opposées de l'enceinte.

Dans un mode de réalisation, lesdits conduits d'évacuation sont reliés à au moins une pompe à vide.

Dans un autre mode de réalisation, lesdits moyens d'amenée débouchent dans la partie inférieure de ladite enceinte.

Le gaz traverse alors la pâte avant d'être évacué, formant des bulles d'air dans celle-ci. Les dimensions de ces bulles d'air sont très rapidement réduites grâce au maintien sous vide partiel de l'enceinte.

Dans un premier mode de réalisation du dispositif, l'axe du rotor dudit dispositif est horizontal et la fixation et le guidage étanche du rotor par rapport à ladite cuve sont réalisés au moyen de deux paliers, chaque palier comprenant notamment
- un corps de palier comportant des moyens de fixation à la cuve, et présentant un évidemment central ou siège pour le passage de la partie extrême du rotor ;
- des moyens d'étanchéité agencés pour assurer l'étanchéité dynamique de l'enceinte ;
- une chemise se présentant sous la forme d'une pièce de révolution sensiblement cylindrique, emmanchée sur ladite partie extrême du rotor et interposée entre celle-ci et le corps de palier, les moyens d'étanchéité étant disposés entre le siège du corps de palier et la chemise.

Les moyens d'amenée du gaz dans la cuve sont alors situés au niveau des moyens d'étanchéité dudit palier.

Cette configuration permet d'utiliser des moyens existant déjà pour l'introduction du gaz.

Dans une variante, lesdits moyens d'étanchéité du palier comprennent une pluralité de joints à lèvre emmanchés dans un logement du siège, les lèvres des joints coopérant avec une première partie extrême de la chemise tournée vers la cuve, au moins l'un des joints étant orienté pour que sa lèvre soit tournée vers la cuve, tandis qu'au moins l'un des autres joints est orienté pour que sa lèvre soit tournée à l'opposé.

Dans cette variante, les moyens d'amenée du gaz débouchent dans le logement entre la cuve et ledit joint dont la lèvre est retournée vers la cuve.

Dans une autre variante, lesdits moyens d'étanchéité du palier comprennent une pluralité de joints à lèvre emmanchés dans un logement du siège, les lèvres des joints coopérant avec une première partie extrême de la chemise tournée vers la cuve, deux joints juxtaposés étant orientés pour que leur lèvre soit tournée vers la cuve, tandis qu'au moins l'un des autres joints est orienté pour que sa lèvre soit tournée à l'opposé.

Dans cette variante, les moyens d'amenée du gaz débouchent dans le logement entre lesdits joints juxtaposés dont la lèvre est tournée vers la cuve. Le gaz arrivant en surpression soulève alors le joint disposé entre les moyens d'amenée et la cuve. De plus, le passage du gaz entre les deux joints empêche la pâte de s'introduire dans cet espace garantissant l'hygiène de ce dernier.

Dans un deuxième mode de réalisation du dispositif, l'axe du rotor du dispositif est horizontal et la cuve est asymétrique par rapport à un plan vertical P passant par l'axe de rotation du rotor.

La cuve comporte une première paroi latérale sensiblement verticale, et une deuxième paroi latérale inclinée d'un angle donné avec la verticale. Le fond de cuve courbe relie la première paroi à la seconde paroi latérale, de sorte que la cuve comprend, du côté de la deuxième paroi latérale, un espace s'évasant vers le haut en forme de croissant, situé entre la deuxième paroi latérale et la trajectoire suivie par l'extrémité libre des pales du rotor.

Dans ce mode de réalisation, les moyens d'amenée du gaz débouchent dans ledit espace.

Ainsi, les moyens d'amenée débouchent hors du passage des pales du rotor et sont aisément accessibles.

D'autres objets et avantages de l'invention apparaîtront au cours de la description qui va suivre de modes de réalisation, en référence aux dessins annexés, donnés à titre d'exemples non limitatifs, dans lesquels :
- la figure 1 est une représentation schématique d'un dispositif mettant en oeuvre le procédé de pétrissage de l'invention ;
- la figure 2 est une vue en coupe axiale d'un premier mode de réalisation du dispositif de la figure 1, ledit dispositif comprenant une cuve et un rotor fixé à rotation sur la cuve par deux paliers étanches à roulement;
- la figure 3 est une vue agrandie des moyens d'étanchéité des paliers étanches du dispositif de la figure 2 ;
- la figure 4 est une variante des moyens d'étanchéité représentés sur la figure 3 ;
- la figure 5 est une vue en coupe axiale d'un deuxième mode de réalisation du dispositif de la figure 1 ;
- la figure 6 est un schéma représentant la mise en marche du rotor en fonction du temps pendant la phase de pétrissage ;
- la figure 7 est un schéma représentant des profils possibles de la dépression dans l'enceinte en fonction du temps ;
- la figure 8 est un schéma représentant des profils possibles du débit de gaz en fonction du temps.

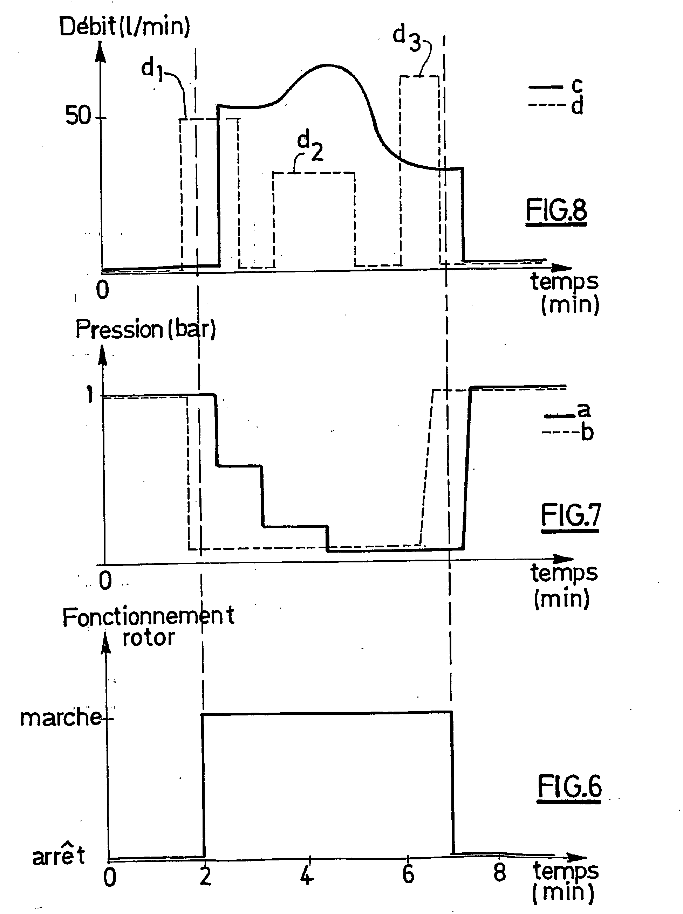

Les abscisses des schémas représentés sur les figures 6 à 8 coïncident afin de pouvoir comparer les durées des différentes phases de pétrissage, dépression et introduction du procédé.

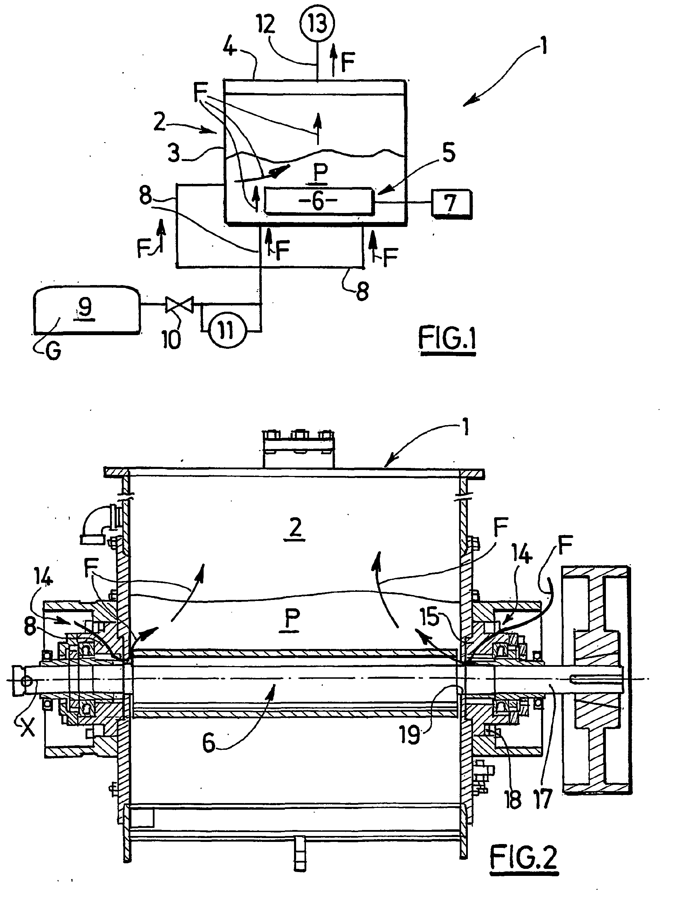

La figure 1 représente schématiquement un dispositif de pétrissage 1, comprenant une enceinte 2 formée d'une cuve 3 destinée à contenir la pâte P et d'un couvercle 4 amovible, fermant hermétiquement ladite cuve 3, et assurant son étanchéité statique.

Ledit dispositif 1 comporte également des moyens de pétrissage 5 comprenant un rotor 6.

L'axe X de rotation du rotor 6 peut être indifféremment vertical ou horizontal. L'horizontalité étant définie par rapport au sol sur lequel repose le dispositif 1, la cuve 3 pouvant être fixe ou basculante.

Dans les modes de réalisation des figures 2 à 5, l'axe X du rotor 6 est horizontal.

Le rotor 6 est monté à rotation dans la cuve 3, il est actionné par un.moteur 7.

Des moyens d'amenée 8 débouchent dans l'enceinte 2 et par exemple dans la cuve 3 afin de permettre l'introduction d'un gaz G contenant de l'oxygène dans ladite cuve.

Dans une réalisation, les moyens d'amenée 8 débouchent dans la partie inférieure de la cuve 3, dans le volume de la pâte P, de sorte que le gaz G traverse la pâte P.

Ces moyens d'amenées 8 sont par exemple des buses ou des ouvertures situées sur la cuve 3 et reliées à un ou plusieurs réservoirs 9 du gaz G. On peut également utiliser comme moyens d'amenée 8 du gaz des moyens d'amenée de l'eau dans ladite enceinte 2.

Une vanne de réglage 10 peut être prévue pour régler le débit de gaz G dans les moyens d'amenée 8.

Il est ainsi possible de régler le débit de gaz G, notamment en fonction de la nature et de la quantité de pâte, du volume de la cuve et du résultat désiré.

Un ou plusieurs débitmètres 11 peuvent être utilisés pour mesurer le débit de gaz G introduit par les moyens d'amenée 8 dans l'enceinte 2.

Le dispositif 1 comporte par ailleurs un ou plusieurs conduits d'évacuation 12 de l'atmosphère présente dans l'enceinte 2. Ces conduits 12 débouchent dans l'enceinte 2 à distance de la pâte P. Ils peuvent être situés sur le couvercle 4 ou sur la partie supérieure de la cuve 3, au dessus de la pâte P.

Ces conduits d'évacuation 12 sont reliés à au moins une pompe à vide 13 qui permet d'assurer un vide partiel dans l'enceinte 2. L'atmosphère de l'enceinte est ainsi en dépression par rapport à la pression atmosphérique à l'extérieur de l'enceinte et par rapport à la pression dans les moyens d'amenée 8.

Des moyens de mesure de la pression, tels que des manomètres, peuvent être utilisés pour mesurer les pressions dans les moyens d'amenée 8 et dans l'enceinte 2.

Le fonctionnement de la ou des pompes à vide 13 est réglé de sorte qu'aucune surpression par rapport à la pression atmosphérique n'est appliquée dans l'enceinte 2.

Ainsi, le gaz G est introduit dans l'enceinte 2 par les moyens d'amenée 8, puis il est aspiré dans les conduits d'évacuation 12 par la ou les pompes à vide 13. Une circulation du gaz est ainsi induite dans l'enceinte 2. Cette circulation est symbolisée par les flèches F sur les figures.

Les moyens d'amenée du gaz 8 et les conduits d'évacuation 12 peuvent être disposés sur des parties sensiblement opposées de l'enceinte 2, afin de favoriser la traversée de la pâte P par le gaz G.

La pression dans l'enceinte 2 est telle qu'elle est inférieure à la pression des moyens d'amenée 8 et/ou du réservoir 9.

Une différence de pression est ainsi créée entre l'enceinte 2 et le réservoir 9 de gaz G favorisant l'introduction du gaz G dans l'enceinte 2.

La différence de pression peut être accentuée en augmentant la pression du gaz dans le réservoir 9 et/ou dans les conduits d'amenée 8.

Des modes de réalisations particuliers du dispositif 1 et des moyens d'amenée 8 sont maintenant décrits en détail.

Dans un premier mode de réalisation, en référence aux figures 2 à 4, l'axe X du rotor 6 est horizontal et la fixation et le guidage étanche du rotor 6 par rapport à ladite cuve 3 sont réalisés au moyen de paliers 14.

On décrit à présent en détail l'un des paliers 14, en supposant les deux paliers identiques.

Le palier 14 comprend un corps de palier 15 qui présente un évidement central 16 traversant appelé siège, présentant une symétrie de révolution, et dans lequel est insérée une partie extrême 17 du rotor 6.

Le corps de palier 15 est fixé sur une paroi latérale de la cuve 3 du côté extérieur, à l'aide de moyens de fixation amovible 18 tels que des vis régulièrement réparties sur la circonférence du corps de palier 15.

Le corps de palier 15 est fixé au droit d'une ouverture 19 pratiquée dans ladite paroi latérale de la cuve 3, de sorte que l'axe de révolution du siège 16 coïncide avec l'axe X de rotation du rotor 6.

Le palier 14 est prévu pour assurer une étanchéité totale de l'intérieur de la cuve 3 par rapport à l'atmosphère ambiante à l'extérieur de celle-ci.

A cet effet, le palier 14 comporte des moyens d'étanchéité dynamique 20 comprenant une pluralité de joints à lèvre 21, 22, 23 montés en série et emmanchés dans une partie du siège 16 appelée logement 24, adjacente à l'ouverture 19 pratiquée dans la paroi latérale de la cuve 3.

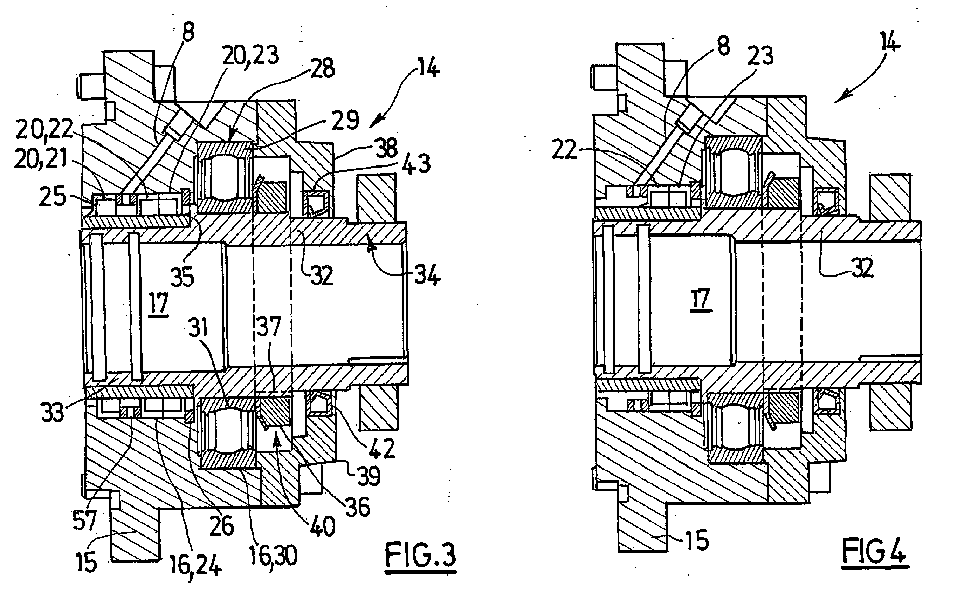

Dans la réalisation illustrée sur la figure 3, trois joints à lèvre 21, 22, 23 sont prévus, entre un épaulement 25 du logement 24 et un circlips intérieur 26 inséré dans une rainure pratiquée dans le logement 24.

Les joints 21, 22, 23 sont agencés pour assurer à la fois l'étanchéité dynamique de la cuve 3 et son maintien en pression, la pression à l'intérieur de la cuve pouvant être inférieure à la pression atmosphérique par exemple 50m bars, tandis que la vitesse de rotation du rotor en fonctionnement est généralement comprise entre 10 tours par minute et 250 tours par minute.

A cet effet, au moins l'un 21 des joints, par exemple le plus proche de la cuve 3, est orienté pour que sa lèvre soit tournée vers l'intérieur de la cuve 3, tandis qu'au moins l'un 23 des autres est orienté pour que sa lèvre soit tournée vers l'extérieur de la cuve.

Les moyens d'amenée 8 du gaz G dans la cuve 3, sont situés au niveau des moyens d'étanchéité 20 dudit palier 14.

A cet effet, un alésage est prévu dans le corps de palier 15 pour introduire le gaz G.

Cet alésage débouche d'une part dans le logement 24 des moyens d'étanchéité 20 et d'autre part à l'extérieur du palier, sur une partie de la surface externe du palier qui n'est pas en contact avec une autre pièce.

Dans la première variante de la figure 3, les lèvres des joints 21, 22 coopèrent avec la partie extrême 17 de la chemise 32 tournée vers la cuve 3, les deux joints 21, 22 étant orientés pour que leur lèvre soit tournée vers la cuve 3, tandis l'autre joint 23 est orienté pour que sa lèvre soit tournée à l'opposé.

Dans cette variante, les moyens d'amenée 8 du gaz débouchent dans le logement 24, entre les joints juxtaposés 21, 22.

La différence de pression entre l'enceinte 2 et les moyens d'amenée 8 favorise alors le soulèvement de la lèvre du joint 21 et le passage du gaz G vers l'enceinte.

Dans la deuxième variante de la figure 4, seuls deux joints juxtaposés 22, 23, sont utilisés, les deux joints 22, 23 étant orientés pour que leur lèvre soit tournée respectivement vers la cuve 3, et à l'opposé.

Les moyens d'amenée 8 du gaz débouchent alors dans le logement 24 entre la cuve 3 et lesdits joints juxtaposés 22, 23.

Ces moyens d'amenée 8 peuvent être disposés sur les deux paliers 14 du rotor, ou sur l'un des deux. On peut également envisager la réalisation d'un ou plusieurs alésages dans un palier 14 pour l'introduction du gaz G.

Le gaz est ainsi introduit au plus près de la pâte, directement sur le rotor.

Un mode de réalisation de la structure d'un palier 14 est maintenant décrite en détail en référence à la figure 3.

Afin d'assurer un maintien rigide des joints 21, 22, 23 dans leur logement 24 entre l'épaulement 25 et le circlips 26, au moins une entretoise 27 peut être insérée entre deux joints 21, 22 successifs.

Par ailleurs, afin d'assurer le guidage en rotation du rotor 6, le palier 14 comprend au moins un roulement 28 interposé entre le corps de palier 15 et la partie extrême 17 du rotor 6.

Le roulement 28 comprend une bague extérieure fixe 29, associée au corps de palier 15 en étant par exemple emmanchée dans un alésage 30 du siège 16, une bague intérieure mobile 31, et des corps roulants entre elles, tels que des billes, des aiguilles, ou encore des rouleaux cylindriques ou coniques.

Les joints à lèvre 21, 22, 23, et le roulement 28 ne sont pas en contact direct avec la partie extrême 17 du rotor 6.

En effet, le palier 14 comprend une pièce intermédiaire 32 de révolution, sensiblement cylindrique et creuse, appelée chemise, emmanchée sur la partie extrême 17 du rotor 3, et interposée entre celle-ci et le corps de palier 15.

La chemise 32 présente une première partie extrême 33 tournée vers l'intérieur et insérée dans le siège 16 du corps de palier 15, ainsi qu'une deuxième partie extrême 34 opposée, saillant du siège 16 vers l'extérieur.

Le roulement 28 est interposé entre le siège 16 du corps de palier 15 et la chemise 32, sa bague intérieure 31 étant emmanchée sur la chemise 32, et montée serrée entre un épaulement 35 saillant de la chemise 32, et un écrou 36 vissé sur une partie filetée 37 de la chemise 32.

Par ailleurs, les joints à lèvre 21, 22, 23 sont interposés entre le corps de palier 15 et la chemise 32, leurs lèvres étant en contact avec la première partie extrême 33 de la chemise 32.

En outre, afin d'une part d'assurer le serrage de la bague extérieure 29 du roulement 28, et d'autre part d'assurer une étanchéité complémentaire du palier, 14, ce dernier comprend un couvercle 38 associé au corps de palier 15.

A cet effet, le couvercle 38 comprend un corps de couvercle 39 se présentant sous la forme d'une pièce de révolution présentant un évidement central 40 pour le passage de la partie extrême 17 du rotor 6 et de la deuxième partie extrême 34 de la chemise 32 emmanchée sur celle-ci.

Le couvercle 38 comprend également des moyens de fixation amovible 41 du corps de couvercle 39 au corps de palier 15, du côté opposé à la cuve 3, c'est-à-dire du côté tourné vers l'extérieur.

Ces moyens de fixation 41 se présentent par exemple sous la forme d'une pluralité de vis régulièrement répartie sur la circonférence du corps de couvercle 38.

En outre, le couvercle comprend un joint à lèvre 42 interposé entre le corps de couvercle 39 et la chemise 32.

Le joint à lèvre 42 est par exemple emmanché dans un logement 43 ménagé dans l'évidement central 40 du corps de couvercle 39, sa lèvre étant en contact avec la deuxième partie extrême 34 de la chemise 32.

Par ailleurs, la chemise 32 présente une extrémité 43 saillant du couvercle 38 vers l'extérieur.

Afin de solidariser au moins en rotation la chemise 32 et la partie extrême 17 du rotor 6, le palier comprend un collier de serrage 44 annulaire enserrant l'extrémité 43 de la chemise 32, ce collier formant moyen de fixation amovible de la chemise 32 au rotor 6.

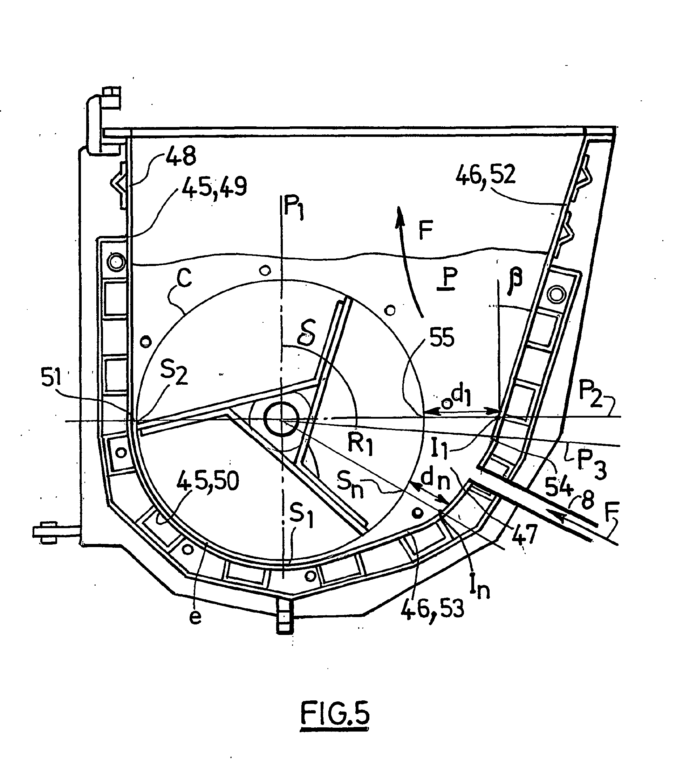

Dans un deuxième mode de réalisation, en référence à la figure 5, le dispositif est tel que l'axe X du rotor 6 est horizontal et la cuve 3 est asymétrique par rapport à un plan vertical P1 passant par l'axe X de rotation du rotor.

La cuve comporte une première paroi latérale 45 sensiblement verticale, et une deuxième paroi latérale 46 inclinée d'un angle donné avec la verticale.

Le fond de cuve courbe relie la première paroi 45 à la seconde paroi 46 latérale, de sorte que la cuve 3 comprend, du côté de la deuxième paroi latérale 46, un espace 47 s'évasant vers le haut en forme de croissant.

Cet espace 47 est situé entre la deuxième paroi latérale 46 et la trajectoire suivie par l'extrémité libre des pales du rotor 6. Cette trajectoire est représentée par la courbe C sur la figure 5.

Les moyens d'amenée 8 du gaz débouchent dans ledit espace 47, hors de la zone de passage des pales du rotor 6, et sont ainsi aisément accessibles.

Une disposition particulière des parois 45, 46 de la cuve 3 est décrite est ci-après.

La face interne 48 de la première paroi latérale 45 comprend une portion rectiligne 49 verticale, et une portion courbe 50, reliées au niveau d'une jonction 51. La jonction 51 appartient sensiblement à un plan P2 horizontal passant par l'axe X du rotor 6. Ainsi la trajectoire C des pales est sensiblement tangente à la face interne 48, en fait écartée d'un espace e, sensiblement à partir de la jonction 51 sur environ ¼ de tour jusqu'au sommet inférieur S1 de la trajectoire C. La trajectoire circulaire C épousant la forme de la face interne 48, la portion 49 est tangente au sommet S2 de la trajectoire C.

La face interne 48 de la deuxième paroi latérale 46 comprend une portion rectiligne 52, et une portion courbe 53, reliées au niveau d'une jonction 54.

On définit, le long de la deuxième paroi latérale 46, dₙ la distance entre la tangente à la trajectoire C au sommet Sₙ, et l'intersection Iₙ entre la deuxième paroi 46 et le rayon R1 de la trajectoire passant par l'intersection Iₙ.

Du côté de la deuxième paroi latérale 46 :
- la portion 52 est inclinée d'un angle β de l'ordre de 10° avec la verticale ;
- l'intersection ln est écartée du sommet Sₙ de la distance dₙ.

Ainsi le plan P2 coupe la deuxième paroi latérale 46 au niveau de l'intersection I1, le sommet Sn est repéré en référence 55, l'intersection I1 et le sommet 55 sont espacés de la distance d1.

On définit un angle δ entre, d'une part le plan vertical P1 passant par l'axe du rotor 6, et d'autre part un plan P3 passant par l'axe du rotor 6 et la jonction 54 entre la portion 52 et la portion 53. Les meilleurs résultats obtenus correspondent à une valeur de δ de l'ordre de 100°.

Il est possible d'utiliser un dispositif comprenant une cuve 3 telle que décrite dans le deuxième mode de réalisation et dont la fixation et le guidage étanche du rotor 6 par rapport à ladite cuve 3 sont réalisés au moyen de paliers 14 décrits dans le premier mode de réalisation.

Les moyens d'amenée 8 décrits dans ces modes de réalisation peuvent alors être utilisés en combinaison ou seuls.

Le procédé de pétrissage de la pâte est maintenant décrit.

Au cours d'une première étape, on ouvre le couvercle 4 de façon à permettre l'introduction des ingrédients de la pâte P dans l'enceinte 2.

Ces ingrédients comprennent notamment de la farine, de l'eau et d'autres éléments utilisés en boulangerie. Parmi ces derniers, l'acide ascorbique peut être utilisé comme améliorant. Toutefois, de bons résultats sont obtenus avec le procédé de l'invention sans utiliser d'acide ascorbique.

On introduit ensuite les ingrédients dans l'enceinte, et on referme le couvercle 4 hermétiquement afin d'assurer l'étanchéité de l'enceinte 2.

On met alors le rotor 6 en marche de façon à agiter les ingrédients de la pâte P. Le fonctionnement du rotor correspond à la phase de pétrissage.

Le procédé comprend également :
- une phase de dépression pendant laquelle on applique une pression inférieure à la pression atmosphérique dans l'enceinte 2,
- une ou plusieurs phases d'introduction du gaz G contenant l'oxygène pendant la(les)quelle(s) on introduit le gaz G dans l'enceinte 2.

Les phases de dépression et d'introduction contribuent à créer une circulation de gaz dans l'enceinte 2.

La phase de dépression dure sensiblement pendant toute la durée de la phase de pétrissage.

Elle peut débuter peu de temps avant ou après le début de la phase de pétrissage et se terminer peu de temps avant ou après la fin de la phase de pétrissage.

Plusieurs phases d'introduction peuvent être appliquées au cours de la phase de pétrissage. Les intervalles de temps entre ces phases et la durée de chacune de ces phases pouvant être variables.

Chacune de ces phases d'introduction a lieu sensiblement pendant la phase de pétrissage. Une phase peut toutefois débuter ou finir peu de temps avant ou après le début ou la fin de la phase de pétrissage.

Ainsi, une partie au moins de chaque phase d'introduction et la phase de pétrissage sont simultanées.

Une phase de pétrissage durant de quelques minutes à plusieurs dizaines de minutes, chaque phase d'introduction du gaz G peut durer de l'ordre de quelques secondes à plusieurs dizaines de minutes. Ainsi, une phase peut durer sensiblement pendant toute la durée du pétrissage ou seulement pendant un court instant du pétrissage.

L'introduction du gaz G pendant une durée inférieure au temps de pétrissage est réalisée au détriment de l'oxygénation, mais favorise cependant la réduction de la structure des alvéoles de la mie du pain obtenu.

Au cours d'une phase d'introduction, on peut faire varier le débit d'introduction du gaz G en fonction des besoins. Ce débit peut par ailleurs varier d'une phase à une autre au cours d'une même phase de pétrissage.

Au cours de la phase de dépression, la dépression dans l'enceinte 2 est réalisée au moyen de pompes à vide 13 qui fonctionnent tant que la pression dans l'enceinte 2 doit être réduite.

Notamment, en absence d'introduction du gaz G, le fonctionnement des pompes à vide 13 peut être suspendu si l'étanchéité de l'enceinte est suffisante pour qu'une dépression puisse être maintenue dans cette dernière.

Lors de la phase de dépression, la pression absolue appliquée dans ladite enceinte 2 peut être comprise entre 0,02 bar et 0,98 bar. Il est possible de faire varier cette pression pendant la phase de dépression.

Le nombre et la durée des phases d'introduction du gaz, ainsi que la durée de la phase de dépression et la valeur de la pression appliquée à l'enceinte durant cette phase, sont fonctions notamment de la nature et de la quantité de la pâte P, du volume de la cuve et du résultat désiré.

Au cours du pétrissage, on peut faire varier la vitesse de rotation du rotor 6 afin de l'adapter au produit désiré. La durée de la phase de pétrissage est alors en général de plus en plus longue au fur et à mesure que l'on réduit la vitesse de rotation du rotor 6.

A la fin de la phase de pétrissage, le fonctionnement du rotor 6 est arrêté, et, lorsque la pression dans l'enceinte 2 est égale à la pression atmosphérique, le couvercle 4 est enlevé et l'on peut retirer la pâte.

Dans une variante du procédé, lors de la phase d'introduction du gaz G dans l'enceinte 2, on introduit le gaz G dans l'enceinte 2 dans le volume de la pâte P, de sorte que la circulation de gaz traversela pâte P.

Dans une autre variante, l'introduction du gaz G dans ladite enceinte est réalisée en utilisant le dispositif d'amenée de l'eau dans ladite enceinte 2.

Le gaz contenant de l'oxygène peut être de l'air ou tout autre gaz contenant de l'oxygène convenable pour la réalisation de la pâte alimentaire.

Enfin, on peut prévoir des moyens de commande permettant de régler les différents paramètres du procédé tels que la pression dans l'enceinte et/ou dans les conduits d'amenée, le débit de gaz G, la vitesse de rotation du rotor et la durée des différentes phases.

Des exemples de durées des différentes phases sont décrits ci-après en référence aux figures 6 à 8.

La figure 6 représente le fonctionnement du rotor en fonction du temps, la courbe obtenue symbolisant la durée de la phase de pétrissage.

La figure 7 représente la pression de l'enceinte 2 en fonction du temps. Ainsi, les courbes a, b représentent des exemples d'évolution de la pression au cours de la phase de dépression.

La courbe a (en trait continu) correspond à une phase au cours de laquelle la pression de l'enceinte 2 est réduite progressivement. La diminution de la pression débute peu de temps après le début de la phase de pétrissage et s'arrête peu de temps après la fin de la phase de pétrissage.

La courbe c (en trait discontinu) correspond à une diminution rapide de la pression peu de temps avant le début de la phase de pétrissage, la pression augmentant à nouveau peu de temps avant la fin du pétrissage.

La figure 8 représente le débit de gaz G introduit dans l'enceinte 2 en fonction du temps. Chaque courbe c, d représente une phase d'introduction du gaz G.

La courbe c (en trait continu) correspond à une seule phase d'introduction au cours de laquelle l'introduction du gaz commence peu de temps après le début de la phase de pétrissage et se termine peu de temps après la fin de la phase de pétrissage. Au cours de cette phase, le débit de gaz varie en fonction du temps. Une telle phase peut par exemple être combinée avec la phase de dépression représentée par la courbe a de la figure 7.

La courbe d (trait discontinu) est constituée de trois courbes d1, d2 et d3 correspondant à trois phases d'introduction. Au cours de chacune de ces phases, le gaz est introduit à débit constant, le débit variant d'une phase à l'autre. Les durées et les intervalles entre ces phases sont variables.

L'ensemble de ces trois phases, chacune des phases, ou toutes les combinaisons entre deux de ces phases peuvent être combinées à la phase de dépression représentée par la courbe b de la figure 7.

Un exemple de mise en oeuvre du procédé est décrit ci-après.

Dans cet exemple, on utilise le dispositif 1 décrit dans le premier mode de réalisation. Le volume de la cuve 3 est de 400 litres.

Le gaz employé est de l'air, ce dernier est introduit par les deux paliers 14 du rotor.

Pour 260 kg de pâte à pain, les conditions suivantes sont utilisées pour obtenir une pâte à pain de bonne qualité :
- durée de la phase de pétrissage : 6 minutes et trente secondes ;
- à chaque palier 14 : introduction d'air avec un débit de 50 litres par minute et une pression de 3 bars dans les moyens d'amenée 8 ;
- pression dans l'enceinte 2 : -0,8 bar , la pression absolue dans l'enceinte 2 est alors de 0,2 bar.

Les phases de dépression et d'introduction du gaz G durent pendant tout le temps de la phase de pétrissage, l'enceinte étant maintenue en permanence en dépression.

Le procédé selon l'invention peut être appliqué à tout dispositif de pétrissage dont l'enceinte peut être mise sous vide partiel. Il suffit alors de rajouter des moyens d'amenée du gaz dans ladite enceinte.

## Revendications

1. Procédé de pétrissage de pâte pour la fabrication de pain ou de produits similaires, dans lequel on introduit les ingrédients de la pâte (P) dans une enceinte (2), puis on pétrit ensemble lesdits ingrédients pendant une phase de pétrissage; comprenant :
- une phase de dépression au cours de laquelle on applique une dépression dans l'enceinte (2), l'atmosphère présent dans l'enceinte étant aspiré au dessus de la pâte;
- une phase ou plusieurs phase (s) d'introduction du gaz G pendant la (les) quelle (s) on introduit dans l'enceinte (2) un gaz (G) contenant de l'oxygène dans la portion inférieure de l'enceinte (2) de telle sorte que le gaz G traverse la pâte ;
la phase de dépression durant sensiblement pendant toute la durée de la phase de pétrissage, une partie au moins de chaque phase d'introduction du gaz étant simultanée à la phase de pétrissage et à la phase de dépression.

2. Procédé selon la revendication 1, **caractérisé en ce que** la phase de dépression débute peu de temps avant ou après le début de la phase de pétrissage et/ou finit peu de temps avant ou après la fin de la phase de pétrissage.

3. Procédé selon les revendications 1 ou 2, caractérisé en ce la (les) phase (s) d'introduction du gaz débutent peu de temps avant ou après le début ou la fin de la phase de pétrissage.

4. Procédé selon l'une quelconque des revendications 1 à 3, caractérisé en ce la (les) phase (s) d'introduction du gaz finissent peu de temps avant ou après le début ou la fin de la phase de pétrissage.

5. Procédé selon l'une quelconque des revendications 1 à 4, **caractérisé en ce que** le procédé comprend une seule phase d'introduction du gaz G qui dure sensiblement pendant toute la phase de pétrissage.

6. Procédé selon l'une quelconque des revendications 1 à 4, **caractérisé en ce que** le procédé comprend plusieurs phases d'introduction du gaz, les intervalles de temps entre ces phases et la durée de chacune de ces phases étant variables.

7. Procédé selon l'une quelconque des revendications 1 à 6, **caractérisé en ce que** chaque phase d'introduction du gaz dure quelques secondes à plusieurs dizaines de minutes.

8. Procédé selon l'une quelconque des revendications 1 à 7, **caractérisé en ce que** durant chaque phase d'introduction du gaz, on peut faire varier le débit de gaz G.

9. Procédé selon l'une quelconque des revendications 1 à 8, **caractérisé en ce que** durant la phase de dépression, on applique une pression absolue dans l'enceinte (2) comprise entre 0,02 bar et 0, 98 bar.

10. Procédé selon l'une quelconque des revendications 1 à 9, **caractérisé en ce qu'**on introduit ledit gaz (G) dans l'enceinte (2) dans le volume de la pâte (P).

11. Dispositif (1) pour la mise en oeuvre du procédé selon l'une quelconque des revendications 1 à 10, ledit dispositif (1) comportant une enceinte (2) formée d'une cuve (3) destinée à contenir la pâte (P) et d'un couvercle (4) amovible fermant hermétiquement ladite cuve, et des moyens de pétrissage (5) comprenant un rotor (6), des moyens d'amenée (8) du gaz (G), reliés à un ou plusieurs réservoirs (9) de gaz (G), débouchant dans l'enceinte (2) et des conduits d'évacuation (12) de l'atmosphère de l'enceinte débouchant dans l'enceinte (2) à distance de la pâte (P), ledit dispositif étant **caractérisé en ce que** les conduits d'évacuation (12) sont reliés à une pompe à vide permettant d'assurer un vide partiel dans l'enceinte, **en ce que** le dispositif comporte des moyens de commande pour régler les différents paramètres du procédé, et est agencé de sorte qu'une différence de pression entre l'enceinte (2) et le réservoir (9) ou les moyens d'amenée (8) soit crée afin de favoriser l'introduction du gaz G dans l'enceinte et **en ce que** les conduits d'évacuation (12) débouchent dans l'enceinte (2), au-dessus de la pâte (P) et les moyens d'amenée débouchent dans la partie inférieure de la cuve de sorte que la gaz G traverse la pâte.

12. Dispositif selon la revendication 11 **caractérisé en ce que** lesdits moyens d'amenée (8) du gaz débouchent dans la partie inférieure de ladite enceinte (2) dans le volume de la pâte (P).

13. Dispositif selon la revendication 1 ou 12, dans lequel l'axe (X) du rotor (6) est horizontal et la fixation et le guidage étanche du rotor (6) par rapport à ladite cuve (3) sont réalisés au moyen d'au moins un palier (14), ledit palier (14) comprenant notamment : - Un corps de palier (15) comportant des moyens de fixation (18) à la cuve (3), et présentant un évidement central (16) ou siège pour le passage de la partie extrême (17) du rotor (6) ; - Des moyens d'étanchéité (20) agencés pour assurer l'étanchéité dynamique de l'enceinte (2) ; - Une chemise (32) se présentant sous la forme d'une pièce de révolution sensiblement cylindrique, emmanchée sur ladite partie extrême (17) du rotor (6) et interposée entre celle-ci et le corps de palier (15), les moyens d'étanchéité (20) étant disposés entre le siège (16) du corps du palier (3) et la chemise (32) ; **caractérisé en ce qu'**il comprend des moyens d'amenée (8) du gaz (G) dans ladite cuve (3), situés au niveau des moyens d'étanchéité (20) dudit palier (14).

14. Dispositif selon la revendication 13, dans lequel lesdits moyens d'étanchéité (20) du palier (14) comprennent une pluralité de joints à lèvre (22,23) emmanchés dans un logement (24) du siège (16), les lèvres des joints coopérant avec une première partie extrême (17) de la chemise (32) tournée vers la cuve (3), au moins l'un des joints (21) étant orienté pour que sa lèvre soit tournée vers la cuve (3), tandis qu'au moins l'un des autres joints (23) est orienté pour que sa lèvre soit tournée à l'opposé, **caractérisé en ce que** les moyens d'amenée (8) du gaz (G) débouchent dans le logement (24) entre la cuve (3) et ledit joint (22) dont la lèvre est retournée vers la cuve.

15. Dispositif selon la revendication 14, dans lequel lesdits moyens d'étanchéité (20) du palier (14) comprennent une pluralité de joints à lèvre (21,22, 23) emmanchés dans un logement (24) du siège (16), les lèvres des joints coopérant avec une première partie extrême (17) de la chemise (32) tournée vers la cuve (3), deux joints juxtaposés (21,22) étant orientés pour que leur lèvre soit tournée vers la cuve (3), tandis qu'au moins l'un des autres joints (23) est orienté pour que sa lèvre soit tournée à l'opposé, **caractérisé en ce que** les moyens d'amenée (8) du gaz débouchent dans le logement (24) entre lesdits joints juxtaposés (21, 22) dont la lèvre est tournée vers la cuve.

16. Dispositif selon l'une quelconque des revendications 11 à 15, dans lequel l'axe (X) du rotor (6) est horizontal et la cuve (3) est asymétrique par rapport à un plan vertical (P1) passant par l'axe de rotation (X) du rotor, la cuve comportant une première paroi latérale (45) sensiblement verticale, et une deuxième paroi latérale (46) inclinée d'un angle donné avec la verticale, le fond de cuve courbe reliant la première paroi à la seconde paroi latérale, de sorte que) a cuve (3) comprend, du côté de la deuxième paroi latérale (46), un espace (47) s'évasant vers le haut en forme de croissant, situé entre la deuxième paroi (46) latérale et la trajectoire (C) suivie par l'extrémité libre des pales du rotor (6), **caractérisé en ce que** les moyens d'amenée (8) du gaz débouchent dans ledit espace (47).

## Claims

1. A method of kneading dough in order to produce bread or similar products, wherein the dough ingredients (P) are introduced into a chamber (2) and all of said ingredients are subsequently kneaded during a kneading phase, comprising:
- a vacuum phase during which a vacuum is applied in the chamber (2), the atmosphere present in the chamber being suctioned above the dough;
- one or more phases involving the introduction of gas G, during which a gas (G) containing oxygen is introduced into the chamber (2) in the lower portion of the chamber (2) so that the gas G passes through the dough;
the vacuum phase continuing more or less throughout the entire kneading phase, with at least one part of each gas introduction phase taking place simultaneously with the kneading phase and the vacuum phase.

2. The method according to claim 1, **characterized in that** the vacuum phase begins shortly before or after the beginning of the kneading phase and/or ends shortly before or after the end of the kneading phase.

3. The method according to claims 1 or 2, **characterized in that** the gas introduction phase(s) begin(s) shortly before or after the beginning or end of the kneading phase.

4. The method according to any one of claims 1 to 3, **characterized in that** the gas introduction phase(s) end(s) shortly before or after the beginning or end of the kneading phase.

5. The method according to any one of claims 1 to 4, **characterized in that** the method comprises a single introduction phase of the gas G that continues more or less throughout the entire kneading phase.

6. The method according to any one of claims 1 to 4, **characterized in that** the method comprises several gas introduction phases, the time intervals between said phases and the length of each of said phases varying.

7. The method according to any one of claims 1 to 6, **characterized in that** each gas introduction phase lasts from several seconds to several tens of minutes.

8. The method according to any one of claims 1 to 7, **characterized in that** during each gas introduction phase, it is possible to vary the gas flow rate G.

9. The method according to any one of claims 1 to 8, **characterized in that** during the vacuum phase, an absolute pressure comprised between 0.02 bar and 0.98 bar is applied in the chamber (2).

10. The method according to any one of claims 1 to 9, **characterized in that** said gas (G) is introduced into the chamber (2) in the volume of the dough (P).

11. A device (1) used to carry out the method according to any one of claims 1 to 10, said device (1) comprising a chamber (2) in the form a tank (3) in which the dough (P) is placed and a removable cover (4) which is used to seal said tank hermetically, and kneading means (5) comprising a rotor (6), intake means (8) for the gas (G), connected to one or more gas (G) reservoirs (9), opening into the chamber (2) and discharge pipes (12) for the atmosphere of the chamber which open into said chamber (2) at a distance from the dough (P), said device being **characterized in that** the discharge pipes (12) are connected to a vacuum pump making it possible to create a partial vacuum in the chamber, **in that** the device comprises control means to adjust the different parameters of the method, and is arranged so that a pressure difference between the chamber (2) and the reservoir (9) or the intake means (8) is created so as to favor the introduction of the gas G into the chamber and **in that** the discharge pipes (12) open into the chamber (2), above the dough (P), and the intake means open into the lower part of the tank so that the gas G passes through the dough.

12. The device according to claim 11, **characterized in that** said gas intake means (8) open into the lower part of said chamber (2) in the volume of the dough (P).

13. The device according to claim 11 or 12, wherein the axis (X) of the rotor (6) is horizontal and the fastening and sealed guiding of the rotor (6) relative to the tank (3) are done using at least one bearing (14), said bearing (14) in particular comprising: - A bearing body (15) comprising fastening means (18) to the tank (3), and having a central recess (16) or seat for the passage of the end part (17) of the rotor (6); - Sealing means (20) arranged to ensure the dynamic sealing of the chamber (2); - A sleeve (32) assuming the form of a piece with a substantially cylindrical revolution, fitted onto said end part (17) of the rotor (6) and inserted between the latter and the bearing body (15), the sealing means (20) being arranged between the seat (16) of the body of the bearing (3) and the sleeve (32); **characterized in that** it comprises means (8) for bringing the gas (G) into said tank (3), situated at the sealing means (20) of said bearing (14).

14. The device according to claim 13, wherein said sealing means (20) of the bearing (14) comprise a plurality of lip seals (22, 23) fitted into a housing (24) of the seat (16), the lip seals cooperating with a first end part (17) of the sleeve (32) oriented towards the tank (3), at least one of the seals (21) being oriented so that its lip faces the tank (3), while at least one of the other seals (23) is oriented so that its lip faces the opposite direction, **characterized in that** the gas (G) intake means (8) open into the housing (24) between the tank (3) and said seal (22) whereof the lip faces the tank.

15. The device according to claim 14, wherein said sealing means (20) of the bearing (14) comprise a plurality of lip seals (21, 22, 23) fitted into a housing (24) of the seat (16), the lips of the seals cooperating with a first end part (17) of the sleeve (32) facing the tank (3), two juxtaposed seals (21, 22) being oriented so that their lip faces the tank (3), while at least one of the other seals (23) is oriented so that its lip faces the opposite direction, **characterized in that** the gas intake means (8) open into the housing (24) between said juxtaposed seals (21, 22) whereof the lip faces the tank.

16. The device according to any one of claims 11 to 15, wherein the axis (X) of the rotor (6) is horizontal and the tank (3) is asymmetrical relative to a vertical plane (P1) passing through the axis of rotation (X) of the rotor, the tank including a first substantially vertical side wall (45), and a second side wall (46) inclined by a given angle with the vertical, the curved tank bottom connecting the first wall to the second side wall, so that the tank (3) comprises, on the side of the second side wall (46), a space (47) flaring upward in the shape of a crescent, situated between the second side wall (46) and the trajectory (C) followed by the free end of the blades of the rotor (6), **characterized in that** the gas intake means (8) open into said space (47).

## Patentansprüche

1. Verfahren für das Kneten von Teig zur Herstellung von Brot oder ähnlichen Produkten, wobei die Zutaten des Teigs (P) in einen Behälter (2) gegeben und dann alle Zutaten während einer Knetphase geknetet werden, die umfasst:
- eine Unterdruckphase, bei der ein Unterdruck in dem Behälter (2) ausgeübt wird, wobei die in dem Behälter vorhandene Atmosphäre über dem Teig abgesaugt wird,
- eine oder mehrere Phasen (s) der Einleitung des Gases G, während der/er in den Behälter (2) ein Sauerstoff enthaltendes Gas (G) in den unteren Abschnitt des Behälters (2) derart eingeführt wird, dass das Gas G den Teig durchquert,
wobei die Unterdruckphase etwa während der gesamten Dauer der Knetphase andauert, wobei mindestens ein Teil jeder Phase der Einleitung des Gases zeitgleich zur Knetphase und zur Unterdruckphase ist.

2. Verfahren nach Anspruch 1, **dadurch gekennzeichnet, dass** die Unterdruckphase kurz vor oder nach dem Beginn der Knetphase beginnt und/oder kurz vor oder nach dem Ende der Knetphase endet.

3. Verfahren nach den Ansprüchen 1 oder 2, **dadurch gekennzeichnet, dass** die Phase/n der Einleitung des Gases kurz vor oder nach dem Beginn oder dem Ende der Knetphase beginnt/beginnen.

4. Verfahren nach einem der Ansprüche 1 bis 3, **dadurch gekennzeichnet, dass** die Phase/n der Einleitung des Gases kurz vor oder nach dem Beginn oder dem Ende der Knetphase endet/enden.

5. Verfahren nach einem der Ansprüche 1 bis 4, **dadurch gekennzeichnet, dass** das Verfahren eine einzige Phase der Einleitung des Gases G umfasst, die etwa während der gesamten Knetphase andauert.

6. Verfahren nach einem der Ansprüche 1 bis 4, **dadurch gekennzeichnet, dass** das Verfahren mehrere Phasen der Einleitung des Gases umfasst, wobei die Zeitabstände zwischen diesen Phasen und die Dauer jeder dieser Phasen veränderbar sind.

7. Verfahren nach einem der Ansprüche 1 bis 6, **dadurch gekennzeichnet, dass** jede Phase der Einleitung des Gases einige Sekunden bis mehrere Dutzend Minuten dauert.

8. Verfahren nach einem der Ansprüche 1 bis 7, **dadurch gekennzeichnet, dass** der Durchsatz von Gas G während jeder Phase der Einleitung des Gases veränderbar ist.

9. Verfahren nach einem der Ansprüche 1 bis 8, **dadurch gekennzeichnet, dass** während der Unterdruckphase ein absoluter Druck in dem Behälter (2) zwischen 0,02 bar und 0,98 bar inklusive angewendet wird.

10. Verfahren nach einem der Ansprüche 1 bis 9, **dadurch gekennzeichnet, dass** das Gas G in dem Behälter (2) in das Volumen des Teigs (P) eingeleitet wird.

11. Vorrichtung (1) zur Umsetzung des Verfahrens nach einem der Ansprüche 1 bis 10, wobei die Vorrichtung (1) einen Behälter (2) aufweist, der von einem Trog (3), der dazu bestimmt ist, den Teig (P) zu enthalten, und von einem abnehmbaren Deckel (4), der den Trog hermetisch verschließt, gebildet wird, und Knetmittel (5), die einen Rotor (6) umfassen, Zufuhrmittel (8) des Gases (G), die mit einem oder mehreren Gas (G)-Vorratsbehältern (9) verbunden sind, die in den Behälter (2) münden, und Abteilungsleitungen (12) der Atmosphäre des Behälters, die in das Behälter (2) beabstandet von dem Teig (P) münden, wobei die Vorrichtung **dadurch gekennzeichnet ist, dass** die Ableitungsleitungen (12) mit einer Vakuumpumpe verbunden sind, die es erlaubt, ein Teilvakuum in dem Behälter abzusichern, dass die Vorrichtung Steuermittel aufweist, um die verschiedenen Verfahrensparameter zu regeln, und derart ausgebildet ist, dass ein Druckunterschied zwischen dem Behälter (2) und dem Vorratsbehälter (9) oder den Zufuhrmitteln (8) hergestellt wird, um die Einleitung des Gases G in den Behälter zu erleichtern und dass die Ableitungsleitungen (12) oberhalb des Teigs (P) in den Behälter münden und die Zufuhrmittel derart in den unteren Teil des Trogs münden, dass das Gas G den Teig durchquert.

12. Vorrichtung nach Anspruch 11, **dadurch gekennzeichnet, dass** die Zufuhrmittel (8) des Gases in den unteren Teil des Behälters (2) in das Volumen des Teigs (P) münden.

13. Vorrichtung nach den Ansprüchen 11 oder 12, wobei die Achse (X) des Rotors (6) horizontal ist und die Befestigung und die dichte Führung des Rotors (6) im Verhältnis zum Trog (3) mit einem Lager (14) durchgeführt werden, wobei das Lager (14) vor allem umfasst: - einen Lagerkörper (15), der Befestigungsmittel (18) an dem Trog (3) umfasst und eine zentrale Aussparung (16) oder Sitz für den Durchgang des Endabschnitts (17) des Rotors (6) aufweist, - Dichtungsmittel (20), die ausgebildet sind, um die dynamische Dichtigkeit des Behälters abzusichern (2), - eine Hülle (32), die sich in Form eines etwa zylindrischen Drehteils darstellt, die auf dem Endabschnitt (17) des Rotors (6) angebracht und zwischen diesem und dem Lagerkörper (15) zwischengestellt ist, wobei die Dichtungsmittel (20) zwischen dem Sitz (16) des Lagerkörpers (3) und der Hülle (32) angeordnet sind, **dadurch gekennzeichnet, dass** sie Zufuhrmittel (8) des Gases (G) in den Trog (3) umfasst, die sich auf Ebene der Dichtungsmittel (20) des Lagers (14) befinden.

14. Vorrichtung nach Anspruch 13, wobei die Dichtungsmittel (20) des Lagers (14) eine Vielzahl von Lippendichtungen (22, 23) umfassen, die in einer Aufnahme (24) des Sitzes (16) angebracht sind, wobei die Lippen der Dichtungen mit einem ersten Endabschnitt (17) der in Richtung des Trogs (3) zeigenden Hülle (32) zusammenarbeiten, wobei mindestens eine der Dichtungen (21) derart ausgerichtet ist, dass ihre Lippe in Richtung des Trogs (3) zeigt, wogegen mindestens eine der anderen Dichtungen (23) derart ausgerichtet ist, dass ihre Lippe entgegengesetzt zeigt, **dadurch gekennzeichnet, dass** die Zufuhrmittel (8) des Gases (G) in die Aufnahme (24) zwischen dem Trog (3) und der Dichtung (22) münden, deren Lippe in Richtung des Trogs zeigt.

15. Vorrichtung nach Anspruch 14, wobei die Dichtungsmittel (20) des Lagers (14) eine Vielzahl von Lippendichtungen (21, 22, 23) umfassen, die in einer Aufnahme (24) des Sitzes (16) angebracht sind, wobei die Lippen der Dichtungen mit einem ersten Endabschnitt (17) der in Richtung des Trogs (3) zeigenden Hülle (32) zusammenarbeiten, wobei zwei nebeneinander liegende Dichtungen (21, 22) derart ausgerichtet ist, dass ihre Lippe in Richtung des Trogs (21) zeigt, wogegen mindestens eine der anderen Dichtungen (23) derart ausgerichtet ist, dass ihre Lippe entgegengesetzt zeigt, **dadurch gekennzeichnet, dass** die Zufuhrmittel (8) des Gases (G) in die Aufnahme (24) zwischen die nebeneinander liegenden Dichtungen (21, 22) münden, deren Lippe in Richtung des Trogs zeigt.

16. Vorrichtung nach einem der Ansprüche 11 bis 15, wobei die Achse (X) des Rotors (6) horizontal ist und der Trog (3) asymmetrisch ist im Verhältnis zu einer vertikalen Ebene (P1), die durch die Rotationsachse (X) des Rotors verläuft, wobei der Trog eine erste etwa vertikale Seitenwand (45) aufweist und eine zweite, in einem bestimmten Winkel zur Vertikalen geneigte Seitenwand (46), wobei der gekrümmte Boden des Trogs die erste Wand mit der zweiten Seitenwand derart verbindet, dass der Trog (3) auf der Seite der zweiten Seitenwand (46) einen Raum (47) aufweist, der sich nach oben halbmondförmig erweitert, der sich zwischen der zweiten Seitenwand (46) und der Mantellinie (C) befindet, die vom freien Ende der Blätter des Rotors (6) beschrieben wird, **dadurch gekennzeichnet, dass** die Zufuhrmittel (6) des Gases in den Raum (47) münden.
